# EUROPÄISCHE PATENTSCHRIFT

(11) **EP 3 059 123 B1**
(45) Veröffentlichungstag und Bekanntmachung des Hinweises auf die Patenterteilung: **07.09.2022**
(21) Anmeldenummer: 16155844.0
(22) Anmeldetag: 16.02.2016
(51) Int. Cl.: B60Q 3/74, F21W 106/00, F21Y 115/10

(54) **BELEUCHTUNGSEINRICHTUNG ZUR BELEUCHTUNG EINES INNENRAUMS UND KRAFTFAHRZEUG**
LIGHTING DEVICE FOR ILLUMINATING A PASSENGER COMPARTMENT AND MOTOR VEHICLE
DISPOSITIF D'ECLAIRAGE DESTINE A ECLAIRER UN HABITACLE ET VEHICULE AUTOMOBILE

(30) Priorität: 17.02.2015 DE 102015102214
(43) Veröffentlichungstag der Anmeldung: 24.08.2016
(73) Patentinhaber: Valeo Schalter und Sensoren GmbH, 74321 Bietigheim-Bissingen (DE)
(72) Erfinder: Haebig, Thomas, 96450 Coburg (DE)
(74) Vertreter: Pothmann, Karsten

(56) Entgegenhaltungen:
- WO-A1-2005/007450
- WO-A2-2014/110317
- DE-A1- 10 259 236
- DE-A1- 19 522 739
- DE-A1-102005 013 837

## Beschreibung

Die Erfindung betrifft eine Beleuchtungseinrichtung zur Beleuchtung eines Innenraums eines Kraftfahrzeugs, mit zumindest einer ersten Lichtquelle und einer zweiten Lichtquelle, welche dazu ausgelegt sind unabhängig voneinander aktiviert zu werden und den Innenraum zu beleuchten, wobei die erste Lichtquelle eine erste Lichthauptabstrahlrichtung und die zweite Lichtquelle eine zweite Lichthauptabstrahlrichtung aufweist, und mit einem in den Strahlengängen der Lichtquellen positionierten Diffusorelement. Die Erfindung betrifft außerdem ein Kraftfahrzeug mit einer Beleuchtungseinrichtung.

Beleuchtungseinrichtungen zur Beleuchtung eines Innenraums eines Kraftfahrzeugs sind aus dem Stand der Technik bekannt.

Die DE102005013837A1 offenbart eine Innenraumleuchte für ein Automobil, die an der Decke des Automobils angeordnet ist und den Innenraum des Automobils beleuchtet. Die WO 2014/110317 A2 offenbart beispielsweise eine Beleuchtungseinrichtung für ein Dach-Modul eines Kraftfahrzeugs, bei der Bedienoberflächen besonders gleichmäßig und/oder verschiedenfarbig beleuchtet werden können.

Ein weiteres Beispiel aus dem Stand der Technik ist die WO 2005/007450 A1. Diese Schrift betrifft eine Innenraumleuchte für ein Fahrzeug, die eine normale Leuchtfunktion und eine ambiente Leuchtfunktion zur ambienten Beleuchtung des Innenraumes aufweist. Es ist hierbei vorgesehen, dass für die normale Leuchtfunktion eine Glühlampe vorgesehen ist, die durch einen als Streuscheibe angeordneten Lichtleiter hindurch strahlt.

Des Weiteren ist die Lehre der DE 10259236 A1 bekannt. Hier ist eine Innenleuchte für Fahrzeuge mit wenigstens zwei elektrischen Leuchtmitteln für unterschiedliche Lichtfunktionen offenbart. Die Lichtfunktionen sind insbesondere eine Innenlichtfunktion und eine Auflichtfunktion. Die Leuchtmittel sind derart hinter einer Lichtscheibe angeordnet, dass zumindest ein Teilbereich der Lichtscheibe im Abstrahlbereich beider Leuchtmittel angeordnet ist.

Die DE 19522739 A1 zeigt ferner eine Innenleuchte für Kraftfahrzeuge, mit mindestens einer hinter einer Blende gehalterten und über Anschlusskontakte beaufschlagbaren Glühlampe. Um eine Innenleuchte zu schaffen, mit der ein diffuses, blendfreies Licht abgegeben werden kann, ist hinter der Blende eine Auflichteinheit angeordnet, die mindestens einen gegebenenfalls dimmbaren Auflichtstrahler umfaßt, der einer die Blende durchragenden Blendenbohrung zugeordnet ist.

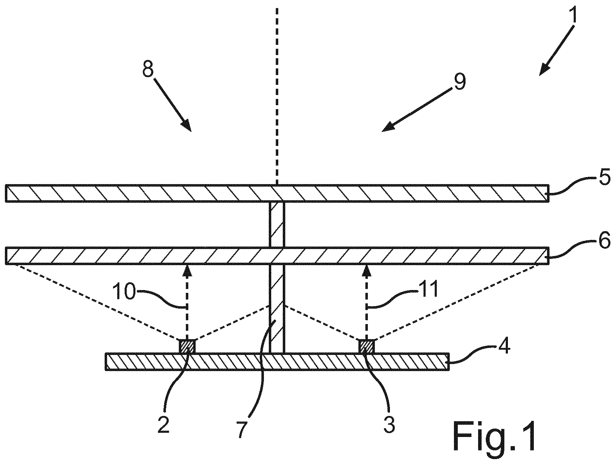

So zeigt Fig. 1 eine Beleuchtungseinrichtung 1 mit einer ersten Lichtquelle 2 und einer zweiten Lichtquelle 3. Die erste Lichtquelle 2 und die zweite Lichtquelle 3 sind auf einer Leiterplatte 4 der Beleuchtungseinrichtung 1 angeordnet. Weiterhin weist die Beleuchtungseinrichtung 1 ein Abdeckelement 5 und ein Diffusorelement 6 auf. Durch ein senkrecht auf der Leiterplatte 4 angeordnetes Teildiffusorelement 7 wird eine Trennung zwischen einem ersten Beleuchtungsteilbereich 8 der Beleuchtungseinrichtung 1 und einem zweiten Beleuchtungsteilbereich 9 der Beleuchtungseinrichtung 1 bereitgestellt. Die erste Lichtquelle 2 weist eine erste Lichthauptabstrahlrichtung 10 auf, während die zweite Lichtquelle 3 eine zweite Lichthauptabstrahlrichtung 11 aufweist. Weiterhin sind die erste Lichtquelle 2 und die zweite Lichtquelle 3 dazu ausgelegt, separat aktiviert zu werden. Es wird somit bei aktivierter erster Lichtquelle 2 der erste Beleuchtungsteilbereich 8 beleuchtet, während bei aktivierter zweiter Lichtquelle 3 der zweite Beleuchtungsteilbereich 9 beleuchtet wird. Das Diffusorelement 6 dient während des Beleuchtens für eine homogene Lichtverteilung beziehungsweise für ein Aufweiten der Strahlengänge der Lichtquellen 2, 3.

In einem ersten Beleuchtungsmodus wird der erste Beleuchtungsteilbereich 8 durch die erste Lichtquelle 2 beleuchtet, während der zweite Beleuchtungsteilbereich 9 unbeleuchtet ist. In einem zweiten Beleuchtungsmodus werden der erste Beleuchtungsteilbereich 8 durch die erste Lichtquelle 2 und der zweite Beleuchtungsteilbereich 9 durch die zweite Lichtquelle 3 gleichzeitig beleuchtet.

Die Fig. 2 zeigt nun die Beleuchtungseinrichtung 1, bei welcher die erste Lichtquelle 2 aktiv ist und die zweite Lichtquelle 3 inaktiv ist. Somit ist der erste Beleuchtungsteilbereich 8 beleuchtet und der zweite Beleuchtungsteilbereich 9 unbeleuchtet.

Die Fig. 3 zeigt die Beleuchtungseinrichtung 1, bei welcher die erste Lichtquelle 2 und die zweite Lichtquelle 3 aktiv sind. Es sind somit der erste Beleuchtungsteilbereich 8 und der zweite Beleuchtungsteilbereich 9 beleuchtet. Zwischen dem ersten Beleuchtungsteilbereich 8 und dem zweiten Beleuchtungsteilbereich 9 ist ein Grenzbereich 12 angeordnet.

Die Fig. 4 zeigt die Helligkeitsverteilung der Beleuchtungseinrichtung 1 bei aktiver erster Lichtquelle 2 und aktiver zweiter Lichtquelle 3. In dem Grenzbereich 12 ist ein Helligkeitsabfall gezeigt.

Ein ähnliches Prinzip wie aus den vorgenannten Zeichnungsbeispielen ist auch aus der Schrift DE 102005013837 A1 bekannt. Diese Schrift beschreibt ebenfalls eine Beleuchtungseinrichtung gemäß dem Stand der Technik, welche zwei Beleuchtungsteilbereiche ausleuchten kann. Dazu weist die dort beschriebene Lösung zwei voneinander beabstandete, separate Leuchtquellen auf, die durch ein mittig angeordnetes Lichtabschattungselement voneinander getrennt sind.

Bei dem Stand der Technik ist in dem Grenzbereich 12, welcher zwischen dem ersten Beleuchtungsteilbereich 8 und dem zweiten Beleuchtungsteilbereich 9 angeordnet ist, ein relativ starker Helligkeitsabfall auftretend. Durch einen Helligkeitsabfall erscheint eine Beleuchtungsintensität des Grenzbereichs 12 der Beleuchtungseinrichtung 1 heterogen im Vergleich zu einer Beleuchtungsintensität des ersten Beleuchtungsteilbereichs 8 und des zweiten Beleuchtungsteilbereichs 9. In dem Grenzbereich 12 liegt also eine geringere Helligkeit vor, als dies in dem ersten Beleuchtungsteilbereich 8 und dem zweiten Beleuchtungsteilbereich 9 der Fall ist.

Es ist Aufgabe der Erfindung, eine Beleuchtungseinrichtung bereitzustellen, bei welcher eine Helligkeit des ersten Beleuchtungsteilbereichs und des zweiten Beleuchtungsteilbereichs und des Grenzbereichs homogen bereitgestellt werden kann.

Diese Aufgabe wird erfindungsgemäß durch eine Beleuchtungseinrichtung nach Anspruch 1 gelöst.

Durch die erfindungsgemäße Beleuchtungseinrichtung kann eine Helligkeitsverteilung der Beleuchtungseinrichtung homogener beziehungsweise gleichmäßiger bereitgestellt werden. Ein Grenzbereich zwischen einem ersten Beleuchtungsteilbereich und einem zweiten Beleuchtungsteilbereich kann somit mit einer gleichen Helligkeit bereitgestellt werden, wie der erste Beleuchtungsteilbereich und der zweite Beleuchtungsteilbereich. Die Lichthauptabstrahlrichtungen der Lichtquellen werden mit der Verbindungslinie verbunden. Die Verbindungslinie ist insbesondere senkrecht auf den Lichthauptabstrahlrichtungen ausgerichtet. Zwischen den Lichtquellen, also der ersten Lichtquelle und der zweiten Lichtquelle, wird das Lichtabschattungselement derart angeordnet, dass das Lichtabschattungselement zumindest teilweise auf der Verbindungslinie angeordnet ist beziehungsweise von dieser geschnitten wird. Durch das Lichtabschattungselement ist es beabsichtigt, dass eine direkte Sichtverbindung von der ersten Lichtquelle zu der zweiten Lichtquelle unterbrochen wird. Es ist somit beabsichtigt, dass kein Licht von der ersten Lichtquelle zu der zweiten Lichtquelle und umgekehrt gelangt. Durch die Anordnung des Lichtabschattungselements zwischen der ersten Lichtquelle und der zweiten Lichtquelle werden Lichtkegel der Lichtquellen verändert. So wird beispielsweise ein Teil des Lichtkegels, welcher auf das Lichtabschattungselement strahlt, nicht weiter zu dem Diffusorelement geleitet. Durch die asymmetrische Anordnung des Lichtabschattungselements zwischen der ersten Lichtquelle und der zweiten Lichtquelle werden die Lichtkegel der Lichtquellen unterschiedlich beeinflusst. Das Lichtabschattungselement ist näher an der ersten Lichtquelle als an der zweiten Lichtquelle angeordnet. Das bedeutet, ein erster Lichtkegel der ersten Lichtquelle wird an der Seite, welche zu dem Lichtabschattungselement ausgerichtet ist, stärker begrenzt als ein zweiter Lichtkegel der zweiten Lichtquelle an der Seite, welche ebenfalls in Richtung des Lichtabschattungselements ausgerichtet ist. So wird durch die asymmetrische Anordnung des Lichtabschattungselements der erste Lichtkegel anders begrenzt als der zweite Lichtkegel. Es ist nun insbesondere vorgesehen, dass durch den ersten Lichtkegel der erste Beleuchtungsteilbereich definiert wird und der zweite Beleuchtungsteilbereich als der Beleuchtungsbereich definiert wird, welcher nicht von dem ersten Lichtkegel beziehungsweise der ersten Lichtquelle beleuchtet wird. Mit anderen Worten ist der zweite Beleuchtungsteilbereich somit von der ersten Lichtquelle unbeleuchtet. Durch die Anordnung des Lichtabschattungselements erstreckt sich jedoch der zweiten Lichtkegel in den ersten Beleuchtungsteilbereich. Es wird durch die zweite Lichtquelle also auch der erste Beleuchtungsteilbereich beleuchtet, wenn die zweite Lichtquelle aktiv ist. Somit findet bei aktiver erster Lichtquelle und bei aktiver zweiter Lichtquelle eine Überschneidung des ersten Lichtkegels und des zweiten Lichtkegels statt. Die Überschneidung ist insbesondere in dem Grenzbereich zwischen dem ersten Beleuchtungsteilbereich und dem zweiten Beleuchtungsteilbereich angeordnet. Somit kann in dem Grenzbereich durch das Überschneiden des ersten Lichtkegels und des zweiten Lichtkegels eine gleichmäßige Helligkeit beziehungsweise eine homogene Lichtintensität bereitgestellt werden. Im Gegensatz zum Stand der Technik, bei welchem der erste Lichtkegel und der zweite Lichtkegel aneinander angrenzen und sich nicht überschneiden, weil die Lichtkegel, insbesondere durch ein Teildiffusorelement, getrennt sind, kann bei der erfindungsgemäßen Beleuchtungseinrichtung durch die Überschneidung der Lichtkegel abhängig von dem Lichtabschattungselement eine homogene Helligkeitsverteilung bereitgestellt werden. Durch das Lichtabschattungselement können auch der erste Beleuchtungsteilbereich und der zweite Beleuchtungsteilbereich definiert werden. Zudem kann der Grenzbereich zwischen dem ersten Beleuchtungsteilbereich und dem zweiten Beleuchtungsteilbereich homogen, also gleichmäßig wie der erste Beleuchtungsteilbereich und der zweite Beleuchtungsteilbereich, beleuchtet werden.

Vorteilhafterweise kann vorgesehen sein, dass eine senkrecht zu der Verbindungslinie bemessene Höhe des Lichtabschattungselements geringer als ein erster Abstand zwischen der ersten Lichtquelle und dem Diffusorelement und/oder ein zweiter Abstand zwischen der zweiten Lichtquelle und dem Diffusorelement ist. Durch die Höhe des Lichtabschattungselements kann erreicht werden, dass die zweite Lichtquelle über das Lichtabschattungselement hinweg in den ersten Beleuchtungsteilbereich abstrahlt. Somit wird der zweiten Lichtkegel durch die Höhe des Lichtabschattungselements nicht davor gehindert, in den ersten Beleuchtungsteilbereich einzustrahlen. Die Höhe des Lichtabschattungselements ist aber andererseits insbesondere derart ausgebildet, dass das Lichtabschattungselement verhindert, dass die erste Lichtquelle in den zweiten Beleuchtungsteilbereich abstrahlt.

Der erste Lichtkegel der ersten Lichtquelle wird also durch eine Mindesthöhe des Lichtabschattungselements daran gehindert, in den zweiten Beleuchtungsteilbereich abzustrahlen. Somit kann für die Höhe des Lichtabschattungselements ein Mindestwert festgelegt werden, welcher derart ist, dass die erste Lichtquelle nicht in den zweiten Beleuchtungsteilbereich abstrahlt, und es kann ein Maximalwert für die Höhe festgelegt werden, durch welchen gewährleistet wird, dass die zweite Lichtquelle in den ersten Beleuchtungsteilbereich abstrahlen kann. Somit kann durch die Höhe des Lichtabschattungselements eine gleichmäßige Verteilung der Helligkeit der Beleuchtungseinrichtung bereitgestellt werden.

In einer weiteren Ausführungsform kann es vorgesehen sein, dass das Lichtabschattungselement als ein plattenartiger Steg ausgebildet ist. Durch den plattenartigen Steg kann das Lichtabschattungselement effektiv bereitgestellt werden. Somit kann die Helligkeitsverteilung der Beleuchtungseinrichtung effektiv gleichmäßig bereitgestellt werden.

In einer weiteren Ausführungsform kann es vorgesehen sein, dass der erste Beleuchtungsteilbereich und der zweite Beleuchtungsteilbereich durch ein Teildiffusorelement des Diffusorelements getrennt sind. Eine Längsachse des Teildiffusorelements ist insbesondere parallel zu der ersten Lichthauptabstrahlrichtung und/oder zu der zweiten Lichthauptabstrahlrichtung ausgerichtet. Das Teildiffusorelement ist insbesondere in dem Grenzbereich, also an dem Übergang von dem ersten Beleuchtungsteilbereich zu dem zweiten Beleuchtungsteilbereich angeordnet. Vorteilhaft an dem Teildiffusorelement ist, dass eine präzise Trennung zwischen dem ersten Beleuchtungsteilbereich und dem zweiten Beleuchtungsteilbereich bereitgestellt werden kann. Das Teildiffusorelement ist insbesondere mit seiner Längsachse senkrecht zu einer Längsachse des restlichen Diffusorelements ausgerichtet.

Vorzugsweise ist vorgesehen, dass die Beleuchtungseinrichtung zumindest eine Leiterplatte umfasst, auf welcher die Lichtquellen, insbesondere die erste Lichtquelle und die zweite Lichtquelle, und das Lichtabschattungselement angeordnet sind. So kann das Lichtabschattungselement beispielsweise unmittelbar auf der Leiterplatte angeordnet sein. Die Lichtquellen können beispielsweise mit einem Verfahren der Oberflächenmontage auf der Leiterplatte angebracht sein. Der Vorteil des Anordnens des Lichtabschattungselements auf der Leiterplatte ist, dass dadurch eine präzise Ausrichtung des Lichtabschattungselements bezüglich der ersten Lichtquelle und/oder der zweiten Lichtquelle erfolgen kann. Durch die präzise Ausrichtung kann auch der erste Beleuchtungsteilbereich und/oder der zweite Beleuchtungsteilbereich bezüglich der jeweiligen Grenzen der Beleuchtungsteilbereiche präzise definiert werden. So hat eine präzise Ausrichtung des Lichtabschattungselements insbesondere zur Folge, dass der erste Beleuchtungsteilbereich und/oder der zweite Beleuchtungsteilbereich präzise und gleichmäßig beleuchtet werden können. Die Beleuchtungseinrichtung kann eine erste Leiterplatte und eine von der ersten Leiterplatte unterschiedliche zweite Leiterplatte umfassen. Vorzugsweise ist die erste Lichtquelle auf der ersten Leiterplatte angeordnet und die zweite Lichtquelle ist auf der zweiten Leiterplatte angeordnet. Durch die erste Leiterplatte und die zweite Leiterplatte kann das Lichtabschattungselement effektiv in der Beleuchtungseinrichtung angeordnet werden.

In einer weiteren Ausführungsform ist es vorgesehen, dass eine Höhe des Lichtabschattungselements mindestens 50 % eines dritten Abstands, der sich von der Leiterplatte zu dem Diffusorelement bemisst, beträgt. So kann die Höhe des Lichtabschattungselements mindestens 50 %, insbesondere 50 bis 80 %, des dritten Abstands betragen, um Teile der ersten Lichtquelle und/oder Teile der zweiten Lichtquelle präzise abschatten zu können. Durch das präzise Abschatten wird eine gleichmäßige Helligkeitsverteilung der Beleuchtungseinrichtung bereitgestellt. Insbesondere kann ein Verhältnis der Höhe des Lichtabschattungselements bezogen auf den dritten Abstand von der Leiterplatte zu dem Diffusorelement als reproduzierbare Vorlage bei der Fertigung der Beleuchtungseinrichtung dienen.

Vorzugsweise ist es vorgesehen, dass das Lichtabschattungselement lichtundurchlässig, insbesondere lichtreflektierend, ausgebildet ist. So ist vorzugsweise vorgesehen, dass weder Licht von der ersten Lichtquelle zu der zweiten Lichtquelle noch von der zweiten Lichtquelle zu der ersten Lichtquelle gelangt. Insbesondere ist vorgesehen, dass der erste Lichtkegel und/oder der zweite Lichtkegel präzise abgeschattet beziehungsweise begrenzt werden. Diese Präzision lässt sich insbesondere realisieren, wenn das Lichtabschattungselement lichtundurchlässig ausgebildet ist. Insbesondere ist das Lichtabschattungselement lichtreflektierend ausgebildet und kann dadurch zu der gleichmäßigeren Beleuchtung der Beleuchtungseinrichtung beitragen. Das Lichtabschattungselement kann aber auch zumindest teilweise lichtabsorbierend ausgebildet sein. Das bedeutet, die Strahlengänge der Lichtquellen, welche auf das Lichtabschattungselement treffen, werden gar nicht oder mit reduzierter Intensität von dem Lichtabschattungselement abgestrahlt beziehungsweise reflektiert. Vorteilhaft ist, dass die Strahlengänge der Lichtquellen präzise ausgelegt werden können und somit eine deutliche Trennung zwischen dem ersten Beleuchtungsteilbereich und dem zweiten Beleuchtungsteilbereich erfolgen kann. Zudem kann durch das präzise Vorhersagen der Strahlengänge auch eine gleichmäßigere Beleuchtung durch die Beleuchtungseinrichtung bereitgestellt werden.

In einer weiteren Ausführungsform kann es vorgesehen sein, dass das Lichtabschattungselement als ein Teil eines Gehäuses der Beleuchtungseinrichtung ausgebildet ist. So kann das Lichtabschattungselement beispielsweise bei der Fertigung des Gehäuses in dem Gehäuse integriert sein. In diesem Fall kann die Leiterplatte beispielsweise zweiteilig ausgebildet sein und ein Teil der Leiterplatte wird mit der ersten Lichtquelle bestückt und ist auf der einen Seite des Lichtabschattungselements angeordnet, während ein anderer Teil der Leiterplatte mit der zweiten Lichtquelle bestückt wird und auf der anderen Seite des Lichtabschattungselements angeordnet ist. Vorteilhaft ist, dass das Lichtabschattungselement dadurch einfach bereitgestellt werden kann. Weiterhin vorteilhaft ist, dass dadurch eine präzise Anordnung des Lichtabschattungselements bezüglich der ersten Lichtquelle und/oder der zweiten Lichtquelle ermöglicht wird. So kann in dem Gehäuse beispielsweise eine Abstandsvorrichtung ausgebildet sein, welche einen vorbestimmten Abstand der jeweiligen Leiterplatte mit der jeweiligen Lichtquelle zu dem Lichtabschattungselement bereitstellt.

Vorzugsweise ist es vorgesehen, dass das Lichtabschattungselement aus, insbesondere schwarzem, Kunststoff ausgebildet ist. Durch den Kunststoff kann das Lichtabschattungselement effektiv und präzise zwischen der ersten Lichtquelle und der zweiten Lichtquelle angeordnet werden. Weiterhin kann durch den Kunststoff insbesondere eine Lichtundurchlässigkeit des Lichtabschattungselements bereitgestellt werden. Vorteilhaft ist schwarzer Kunststoff, weil dadurch insbesondere eine lichtabsorbierende Eigenschaft des Lichtabschattungselements bereitgestellt werden kann.

Erfindungsgemäβ ist vorgesehen, dass ein erster Lichtkegel der ersten Lichtquelle und/oder ein zweiter Lichtkegel der zweiten Lichtquelle durch das Lichtabschattungselement asymmetrisch begrenzt ist. Es ist also vorgesehen, dass durch das Lichtabschattungselement eine Asymmetrie bei den Lichtkegeln erzeugt wird. Der erste Lichtkegel wird also auf der Seite, welche zu dem Lichtabschattungselement gerichtet ist, begrenzt, während er auf der Seite, welche von dem Lichtabschattungselement weg gerichtet ist, im Wesentlichen unbegrenzt ist. Somit gelangt das Licht, welches von dem Lichtabschattungselement abgeschattet wird, nicht zu dem Diffusorelement und ist somit nicht als Beleuchtung von außerhalb der Beleuchtungseinrichtung wahrnehmbar. Durch die asymmetrische Begrenzung des ersten Lichtkegels kann auch der erste Beleuchtungsteilbereich präzise definiert werden. So entsteht die Grenze zwischen dem ersten Beleuchtungsteilbereich und dem zweiten Beleuchtungsteilbereich insbesondere aufgrund der teilweisen Abschattung des ersten Lichtkegels.

Die Erfindung betrifft auch ein Kraftfahrzeug mit einer erfindungsgemäßen Beleuchtungseinrichtung.

Ausführungsbeispiele der Erfindung werden nachfolgend anhand schematischer Zeichnungen näher erläutert.

Dabei zeigen:
- Fig. 1: eine schematische, seitliche Schnittdarstellung einer bekannten Beleuchtungseinrichtung;

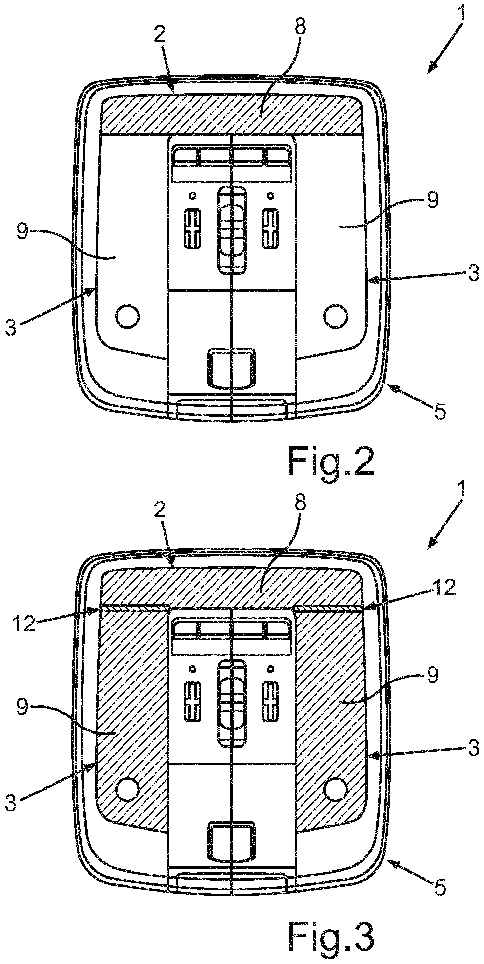

- Fig. 2: eine schematische Darstellung der bekannten Beleuchtungseinrichtung mit einem aktiven ersten Beleuchtungsteilbereich und einem inaktiven zweiten Beleuchtungsteilbereich;
- Fig. 3: eine weitere schematische Darstellung der bekannten Beleuchtungseinrichtung mit dem aktiven ersten Beleuchtungsteilbereich und dem aktiven zweiten Beleuchtungsteilbereich;

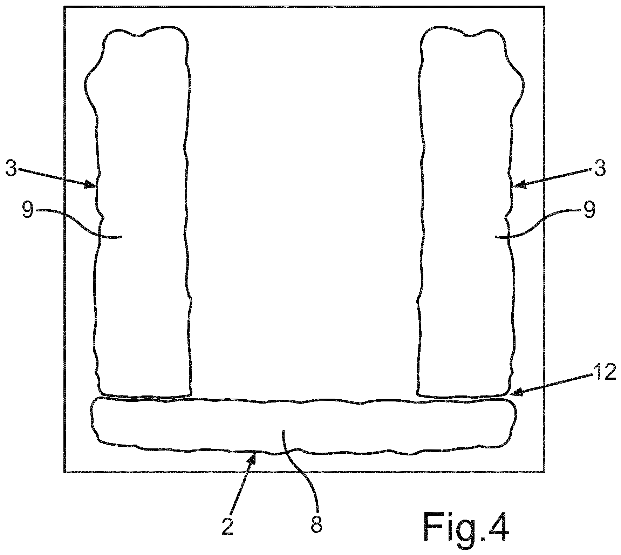

- Fig. 4: eine schematische Darstellung einer Helligkeitsverteilung der bekannten Beleuchtungseinrichtung mit einem aktiven ersten Beleuchtungsteilbereich und dem aktiven zweiten Beleuchtungsteilbereich;

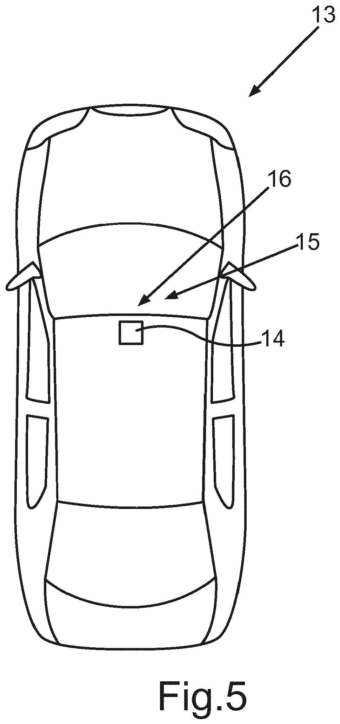

- Fig. 5: in schematischer Draufsicht ein Ausführungsbeispiel eines erfindungsgemäßen Kraftfahrzeugs mit einer Beleuchtungseinrichtung;

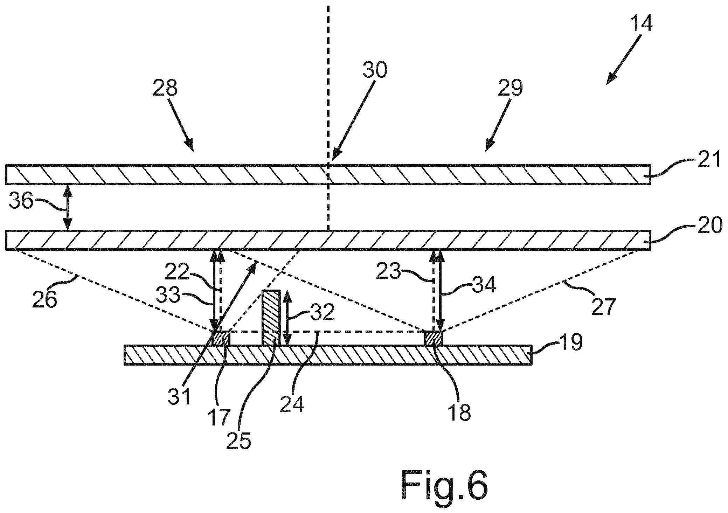

- Fig. 6: eine schematische, seitliche Schnittdarstellung der Beleuchtungseinrichtung mit einem Lichtabschattungselement;

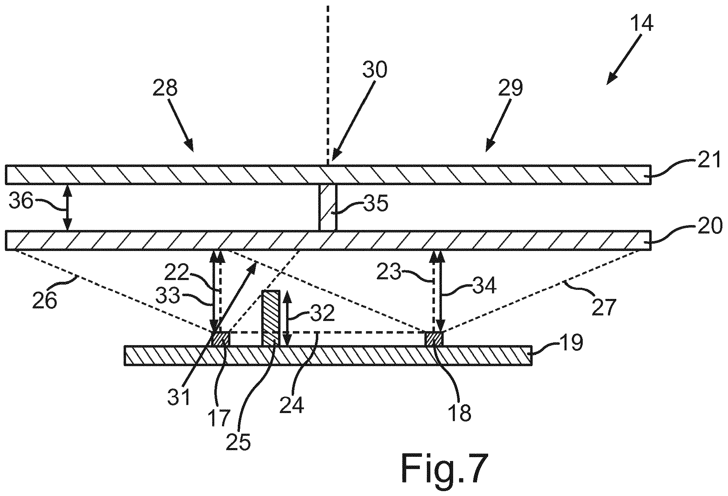

- Fig. 7: eine schematische, seitliche Schnittdarstellung eines weiteren Ausführungsbeispiels der Beleuchtungseinrichtung mit dem Lichtabschattungselement und einem Teildiffusorelement eines Diffusorelements;

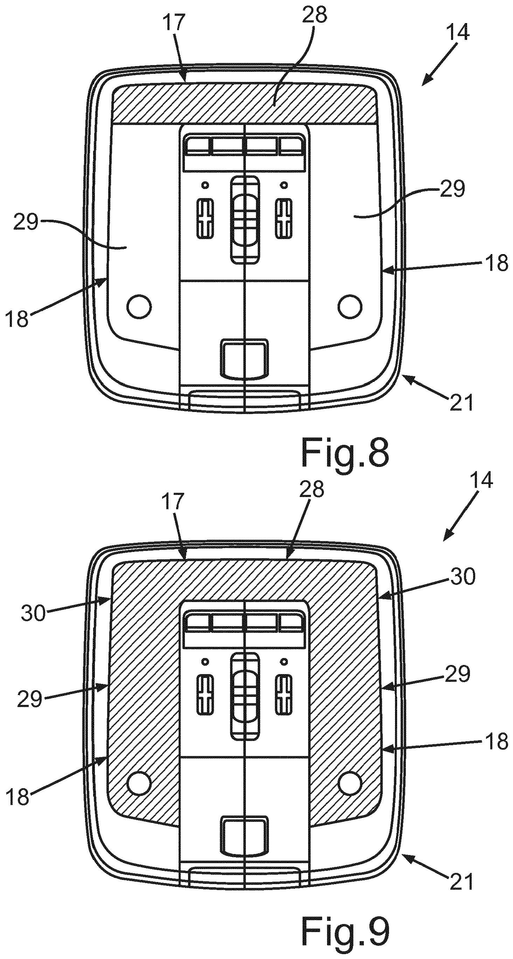

- Fig. 8: eine schematische Darstellung der Beleuchtungseinrichtung mit einem aktiven ersten Beleuchtungsteilbereich und einem inaktiven zweiten Beleuchtungsteilbereich; und
- Fig. 9: eine weitere schematische Darstellung der Beleuchtungseinrichtung mit dem aktiven ersten Beleuchtungsteilbereich und dem aktiven zweiten Beleuchtungsteilbereich.

In den Figuren werden gleiche oder funktionsgleiche Elemente mit den gleichen Bezugszeichen versehen.

In Fig. 5 ist schematische eine Draufsicht auf ein Ausführungsbeispiel eines erfindungsgemäßen Kraftfahrzeugs 13 mit einer Beleuchtungseinrichtung 14 gemäß einer Ausführungsform der Erfindung dargestellt. Die Beleuchtungseinrichtung 14 ist in einem Innenraum 15 des Kraftfahrzeugs 13 angeordnet. Gemäß dem Ausführungsbeispiel ist die Beleuchtungseinrichtung 14 an einem Dachhimmel 16 in dem Innenraum 15 des Kraftfahrzeugs 13 angeordnet. Die Anordnung der Beleuchtungseinrichtung 14 ist jedoch vielfältig möglich, vorzugsweise allerdings so, dass der Innenraum 15 durch die Beleuchtungseinrichtung 14 beleuchtet werden kann.

Fig. 6 zeigt eine seitliche Schnittansicht der Beleuchtungseinrichtung 14. Die Beleuchtungseinrichtung 14 weist eine erste Lichtquelle 17 und eine zweite Lichtquelle 18 auf. Gemäß dem Ausführungsbeispiel sind die erste Lichtquelle 17 und die zweite Lichtquelle 18 auf einer Leiterplatte 19 angeordnet. Die Anordnung der ersten Lichtquelle 17 und/oder der zweiten Lichtquelle 18 ist jedoch vielfältig möglich. So kann die erste Lichtquelle 17 und/oder die zweite Lichtquelle 18 beispielsweise unabhängig von der Leiterplatte 19 in der Beleuchtungseinrichtung 14 angeordnet sein. Weiterhin umfasst die Beleuchtungseinrichtung 14 ein Diffusorelement 20 und ein Abdeckelement 21, insbesondere ein Abdeckglas. Durch das Diffusorelement 20 werden die Strahlen der Lichtquellen 17, 18 bezüglich ihres Querschnitts aufgeweitet. Das Abdeckelement 21 dient beispielsweise dem Schutz der hinter dem Abdeckelement 21 angeordneten Elemente der Beleuchtungseinrichtung 14.

Die erste Lichtquelle 17 und die zweite Lichtquelle 18 weisen eine Vielzahl von Leuchtdioden auf. So kann die Vielzahl beispielsweise durch eine Anzahl von zumindest 20 Leuchtdioden, zumindest 40 Leuchtdioden oder zumindest 60 Leuchtdioden beschrieben werden. Die erste Lichtquelle 17 weist eine erste Lichthauptabstrahlrichtung 22 auf, während die zweite Lichtquelle 18 eine zweite Lichthauptabstrahlrichtung 23 aufweist. Die erste Lichthauptabstrahlrichtung 22 und die zweite Lichthauptabstrahlrichtung 23 sind mit einer Verbindungslinie 24 verbunden. Die Verbindungslinie 24 ist insbesondere jeweils in einem rechten Winkel zu der ersten Lichthauptabstrahlrichtung 22 und der zweiten Lichthauptabstrahlrichtung 23 ausgerichtet. Die Verbindungslinie befindet sich insbesondere im Wesentlichen auf der Höhe der ersten Lichtquelle 17 und der zweiten Lichtquelle 18. Auf der Verbindungslinie 24 ist ein Lichtabschattungselement 25 der Beleuchtungseinrichtung 14 angeordnet. Das Lichtabschattungselement 25 ist, in Richtung der Verbindungslinie 24 betrachte, näher an der ersten Lichtquelle 17 als an der zweiten Lichtquelle 18 angeordnet. Durch das Lichtabschattungselement 25 wird eine direkte Sichtverbindung zwischen der ersten Lichtquelle 17 und der zweiten Lichtquelle 18 unterbunden. Somit kann Licht nicht auf direktem Weg von der ersten Lichtquelle 17 zu der zweiten Lichtquelle 18 und umgekehrt gelangen. Das Lichtabschattungselement 25 ist insbesondere lichtundurchlässig und deshalb beispielsweise aus einem schwarzen Kunststoff gefertigt.

Die erste Lichtquelle 17 weist einen ersten Lichtkegel 26 auf, während die zweite Lichtquelle 18 einen zweiten Lichtkegel 27 aufweist. Die Beleuchtungseinrichtung 14 weist weiterhin gemäß dem Ausführungsbeispiel einen ersten Beleuchtungsteilbereich 28 und einen zweiten Beleuchtungsteilbereich 29 auf. Bei aktivierter erster Lichtquelle 17 und deaktivierter zweiter Lichtquelle 18 wird der erste Beleuchtungsteilbereich 28 insbesondere nur von der ersten Lichtquelle 17 beleuchtet. Der erste Lichtkegel 26 definiert dann den ersten Beleuchtungsteilbereich 28. Der restliche in diesem Fall nicht beleuchtete Bereich der Beleuchtungseinrichtung 14, wird in dem Fall des Ausführungsbeispiels als der zweite Beleuchtungsteilbereich 29 definiert.

Der erste Lichtkegel 26 und/oder der zweite Lichtkegel 27 werden durch das Lichtabschattungselement 25 asymmetrisch begrenzt. Das bedeutet, dass bei aktivierter erster Lichtquelle 17 kein Licht von der ersten Lichtquelle 17 in den zweiten Beleuchtungsteilbereich 29 fällt, weil der erste Lichtkegel 26 durch das Lichtabschattungselement 25 dementsprechend begrenzt ist. Die zweite Lichtquelle 18 beleuchtet im aktiven Zustand den zweiten Beleuchtungsteilbereich 29 und zumindest teilweise den ersten Beleuchtungsteilbereich 28. Der erste Beleuchtungsteilbereich 28 wird von der zweiten Lichtquelle 18 insbesondere in einem Grenzbereich 30 zwischen dem ersten Beleuchtungsteilbereich 28 und dem zweiten Beleuchtungsteilbereich 29 beleuchtet. Das Lichtabschattungselement 25 ist also vorzugsweise so angeordnet, dass der erste Lichtkegel 26 nicht in den zweiten Beleuchtungsteilbereich 29 einstrahlt, während der zweite Lichtkegel 27 jedoch in den zweiten Beleuchtungsteilbereich 29 und den ersten Beleuchtungsteilbereich 28 einstrahlt. Der erste Lichtkegel 26 und der zweite Lichtkegel 27 überschneiden sich somit in einem Lichtkegelüberschneidungsbereich 31. Der erste Lichtkegel 26 und der zweite Lichtkegel 27 überschneiden sich, falls die erste Lichtquelle 17 und die zweite Lichtquelle 18 aktiv sind. Vorzugsweise ist vorgesehen, dass die zweite Lichtquelle 18 nur aktiv ist, falls die erste Lichtquelle 17 ebenfalls aktiv ist. Die Beleuchtungseinrichtung 14 wird also in einem ersten Beleuchtungsmodus betrieben, falls nur die erste Lichtquelle 17 aktiv ist. Alternativ wird die Beleuchtungseinrichtung 14 in einem zweiten Beleuchtungsmodus betrieben, falls die erste Lichtquelle 17 und die zweite Lichtquelle 18 gleichzeitig aktiv sind.

Das Lichtabschattungselement 25 ist insbesondere als ein plattenartiger Steg ausgebildet. Eine senkrecht zu der Verbindungslinie 24 bemessene Höhe 32 des Lichtabschattungselements 25 ist geringer als ein erster Abstand 33 zwischen der ersten Lichtquelle 17 und dem Diffusorelement 20. Ergänzend oder alternativ ist die Höhe 32 geringer als ein zweiter Abstand 34 zwischen der zweiten Lichtquelle 18 und dem Diffusorelement 20.

Die Höhe 32 und eine Position des Lichtabschattungselements 25 ist vorzugsweise so ausgelegt, dass die erste Lichtquelle 17 nicht in den zweiten Beleuchtungsteilbereich 29 abstrahlt, jedoch ein Abstrahlen der zweiten Lichtquelle 18 in den ersten Beleuchtungsteilbereich 28 ermöglicht wird. Bei aktivierter erster Lichtquelle 17 und aktivierter zweiter Lichtquelle 18 wird also dadurch die gesamte Beleuchtungseinrichtung 14, insbesondere die gesamte Fläche des Diffusorelements 20, insbesondere in dem Grenzbereich 30, homogen beziehungsweise gleichmäßig beleuchtet. Falls der erste Lichtkegel 26 und der zweite Lichtkegel 27 sich nicht in dem Lichtkegelüberschneidungsbereich 31 überschneiden würden, so wäre an der Schnittstelle zwischen dem ersten Lichtkegel 26 und dem zweiten Lichtkegel 27 ein harter Gradient beziehungsweise ein Helligkeitsabfall zu beobachten. Durch das Überschneiden des ersten Lichtkegels 26 und des zweiten Lichtkegels 27 kann der Helligkeitsabfall in dem Grenzbereich 30 unterdrückt werden. Die gesamte Fläche des Diffusorelements 20 und somit des Abdeckelements 21 erscheint bei aktivierter erster Lichtquelle 17 und aktivierter zweiter Lichtquelle 18 im Wesentlichen homogen beziehungsweise gleichmäßig beleuchtet. Der Grenzbereich 30 beziehungsweise der Übergang zwischen dem ersten Beleuchtungsteilbereich 28 und dem zweiten Beleuchtungsteilbereich 29 ist dadurch vorzugsweise nicht wahrnehmbar.

Fig. 7 zeigt ein weiteres Ausführungsbeispiel der Beleuchtungseinrichtung 14. Die Beleuchtungseinrichtung 14 ist analog zu Fig. 6 ausgebildet, wobei das Diffusorelement 20 ein Teildiffusorelement 35 umfasst. Das Teildiffusorelement 35 ist gemäß dem Ausführungsbeispiel mit seiner Längsachse senkrecht zu einer Längsachse des Abdeckelements 21 ausgerichtet. Weiterhin wird durch das Teildiffusorelement 35 eine Grenze zwischen dem ersten Beleuchtungsteilbereich 28 und dem zweiten Beleuchtungsteilbereich 29 definiert. Das Teildiffusorelement 35 befindet sich also zumindest teilweise in dem Grenzbereich 30.

Die Beleuchtungseinrichtung 14 kann also mit dem Teildiffusorelement 35 oder ohne das Teildiffusorelement 35 ausgebildet sein. Falls die Beleuchtungseinrichtung 14 - wie in Fig. 6 gezeigt - ohne das Teildiffusorelement 35 ausgebildet ist, so ist ein weiterer Abstand 36 zwischen dem Diffusorelement 20 und dem Abdeckelement 21 vorzugsweise so gering wie möglich ausgelegt.

Fig. 8 zeigt die Beleuchtungseinrichtung 14 mit aktivierter erster Lichtquelle 17 und deaktivierter zweiter Lichtquelle 18. Es ist somit nur der erste Beleuchtungsteilbereich 28 beleuchtet. Der zweite Beleuchtungsteilbereich 29 ist somit unbeleuchtet.

Fig. 9 zeigt die Beleuchtungseinrichtung 14 mit aktivierter erster Lichtquelle 17 und aktivierter zweiter Lichtquelle 18. Es sind somit der erste Beleuchtungsteilbereich 28 und der zweite Beleuchtungsteilbereich 29 beleuchtet. Durch die Anordnung des Lichtabschattungselements 25 erscheint die Beleuchtung der Beleuchtungseinrichtung 14 homogen beziehungsweise gleichmäßig. In dem Grenzbereich 30 kommt es somit zu keinem Helligkeitsabfall. Vorzugsweise sind der erste Beleuchtungsteilbereich 28 und der zweite Beleuchtungsteilbereich 29 in diesem Fall von einem menschlichen Betrachter nicht zu trennen. Vorzugsweise kann ein menschlicher Betrachter den Grenzbereich 30 also nicht örtlich zuordnen, wenn die erste Lichtquelle 17 und die zweite Lichtquelle 18 abhängig von dem Lichtabschattungselement 25 aktiv sind.

In einem weiteren, nicht näher dargestellten, Ausführungsbeispiel umfasst die Beleuchtungseinrichtung 14 mehr als den ersten Beleuchtungsteilbereich 28 und den zweiten Beleuchtungsteilbereich 29. Folglich ist in diesem Fall auch eine Mehrzahl von Lichtabschattungselementen 25 vorgesehen. Durch die Mehrzahl der Lichtabschattungselemente 25 kann ein jeweiliger Übergang zwischen den jeweiligen Beleuchtungsteilbereichen 28, 29 gleichmäßig beleuchtet werden.

In einem nicht weiter dargestellten Ausführungsbeispiel ist die Leiterplatte 19 mehrteilig, insbesondere zweiteilig, ausgebildet. So umfasst die Beleuchtungseinrichtung 14 beispielsweise eine erste Leiterplatte und eine zweite Leiterplatte. Die erste Leiterplatte und die zweite Leiterplatte liegen beispielsweise als separate Einheiten vor. Vorzugsweise ist die erste Lichtquelle 17 auf der ersten Leiterplatte angeordnet und die zweite Lichtquelle 18 ist auf der zweiten Leiterplatte angeordnet.

## Patentansprüche

1. Beleuchtungseinrichtung (14) zur Beleuchtung eines Innenraums (15) eines Kraftfahrzeugs (13), mit einem ersten und einem zweiten Beleuchtungsteilbereich (28, 29) der Beleuchtungseinrichtung (14), und mit zumindest einer ersten Lichtquelle (17) mit einem ersten Lichtkegel (26) und einer zweiten Lichtquelle (18) mit einem zweiten Lichtkegel (27), wobei der erste und zweite Beleuchtungsteilbereich (28, 29) als unmittelbar aneinander angrenzende Bereiche eines Abdeckelements (21) der Beleuchtungseinrichtung (14) ausgeführt sind, welche von der ersten bzw. zweiten Lichtquelle (17, 18) hinterleuchtbar sind, und die Lichtquellen (17, 18) dazu ausgelegt sind, unabhängig voneinander aktiviert zu werden und den Innenraum (15) zu beleuchten, wobei die erste Lichtquelle (17) eine erste Lichthauptabstrahlrichtung (22) und die zweite Lichtquelle (18) eine zweite Lichthauptabstrahlrichtung (23) aufweist, und mit einem in den Strahlengängen der Lichtquellen (17, 18) positionierten Diffusorelement (20), und mit einem Lichtabschattungselement (25) der Beleuchtungseinrichtung (14), welches zumindest teilweise auf einer Verbindungslinie (24) zwischen der ersten Lichtquelle (17) und der zweiten Lichtquelle (18) angeordnet ist, so dass eine direkte Sichtverbindung von der ersten Lichtquelle (17) zu der zweiten Lichtquelle (18) unterbrochen ist, wobei die Verbindungslinie (24) sich im Wesentlichen auf der Höhe der ersten Lichtquelle (17) und der zweiten Lichtquelle (18) befindet und die Lichthauptabstrahlrichtungen (22,23) verbindet, **dadurch gekennzeichnet, dass** die erste Lichtquelle (17) und die zweite Lichtquelle (18) eine Vielzahl von Leuchtdioden aufweisen, und dass das Lichtabschattungselement (25) in Richtung der Verbindungslinie (24) betrachtet näher an der ersten Lichtquelle (17) als an der zweiten Lichtquelle (18) angeordnet ist, so dass bei aktivierter erster Lichtquelle (17) und deaktivierter zweiter Lichtquelle (18) lediglich der erste Beleuchtungsteilbereich (28) mittels des ersten Lichtkegels (26) beleuchtbar ist und bei aktivierter zweiter Lichtquelle (18) der zweite Beleuchtungsteilbereich (29) und zumindest teilweise der erste Beleuchtungsteilbereich (28) mittels des zweiten Lichtkegels (27) beleuchtbar ist.

2. Beleuchtungseinrichtung (14) nach Anspruch 1,
**dadurch gekennzeichnet, dass**
eine senkrecht zu der Verbindungslinie (24) bemessene Höhe (32) des Lichtabschattungselements (25) geringer als ein erster Abstand (33) zwischen der ersten Lichtquelle (17) und dem Diffusorelement (20) und/oder als ein zweiter Abstand (34) zwischen der zweiten Lichtquelle (18) und dem Diffusorelement (20) ist.

3. Beleuchtungseinrichtung (14) nach Anspruch 1 oder 2,
**dadurch gekennzeichnet, dass**
das Lichtabschattungselement (25) als ein plattenartiger Steg ausgebildet ist.

4. Beleuchtungseinrichtung (14) nach Anspruch 1,
**dadurch gekennzeichnet, dass**
der erste Beleuchtungsteilbereich (28) und der zweite Beleuchtungsteilbereich (29) durch ein Teildiffusorelement (35) des Diffusorelements (20) getrennt sind.

5. Beleuchtungseinrichtung (14) nach einem der vorhergehenden Ansprüche,
**dadurch gekennzeichnet, dass**
die Beleuchtungseinrichtung (14) zumindest eine Leiterplatte (19) umfasst, auf welcher die Lichtquellen (17, 18) und das Lichtabschattungselement (25) angeordnet sind.

6. Beleuchtungseinrichtung (14) nach Anspruch 5,
**dadurch gekennzeichnet, dass**
eine Höhe (32) des Lichtabschattungselements (25) mindestens 50 % eines dritten Abstands, der sich von der Leiterplatte (19) zu dem Diffusorelement (20) bemisst, beträgt.

7. Beleuchtungseinrichtung (14) nach einem der vorhergehenden Ansprüche,
**dadurch gekennzeichnet, dass**
das Lichtabschattungselement (25) lichtundurchlässig, insbesondere lichtreflektierend, ausgebildet ist.

8. Beleuchtungseinrichtung (14) nach einem der vorhergehenden Ansprüche,
**dadurch gekennzeichnet, dass**
das Lichtabschattungselement (25) als ein Teil eines Gehäuses der Beleuchtungseinrichtung (14) ausgebildet ist.

9. Beleuchtungseinrichtung (14) nach einem der vorhergehenden Ansprüche,
**dadurch gekennzeichnet, dass**
das Lichtabschattungselement (25) aus Kunststoff ausgebildet ist.

10. Kraftfahrzeug (13) mit einer Beleuchtungseinrichtung (14) nach einem der vorhergehenden Ansprüche.

## Claims

1. Illumination device (14) for illuminating an interior (15) of a motor vehicle (13), having a first and a second illumination subregion (28, 29) of the illumination device (14), and having at least one first light source (17) with a first light cone (26) and a second light source (18) with a second light cone (27), wherein the first and second illumination subregions (28, 29) are embodied as regions of a cover element (21) of the illumination device (14) which immediately adjoin one another and are able to be backlit by the first or second light source (17, 18), and the light sources (17, 18) are designed to be activated independently of one another and to illuminate the interior (15), wherein the first light source (17) has a first light main emission direction (22) and the second light source (18) has a second light main emission direction (23), and having a diffuser element (20) positioned in the beam paths of the light sources (17, 18), and having a light shading element (25) of the illumination device (14) arranged at least partially on a connecting line (24) between the first light source (17) and the second light source (18) in a manner such that a direct line of sight from the first light source (17) to the second light source (18) is interrupted, wherein the connecting line (24) is located substantially at the height of the first light source (17) and the second light source (18) and connects the light main emission directions (22, 23),
**characterized in that** the first light source (17) and the second light source (18) have a multiplicity of lightemitting diodes and **in that** the light shading element (25) is arranged, viewed in the direction of the connecting line (24), closer to the first light source (17) than to the second light source (18) in a manner such that, if the first light source (17) is activated and the second light source (18) is deactivated, only the first illumination subregion (28) is illuminable by means of the first light cone (26), and if the second light source (18) is activated, the second illumination subregion (29) and at least partially the first illumination subregion (28) are illuminable by means of the second light cone (27).

2. Illumination device (14) according to Claim 1, **characterized in that**
a height (32) of the light shading element (25) measured perpendicularly to the connecting line (24) is less than a first distance (33) between the first light source (17) and the diffuser element (20) and/or than a second distance (34) between the second light source (18) and the diffuser element (20).

3. Illumination device (14) according to Claim 1 or 2, **characterized in that**
the light shading element (25) is formed as a plate-type web.

4. Illumination device (14) according to Claim 1, **characterized in that**
the first illumination subregion (28) and the second illumination subregion (29) are separated by a partial diffuser element (35) of the diffuser element (20).

5. Illumination device (14) according to any one of the preceding claims,
**characterized in that**
the illumination device (14) comprises at least one printed circuit board (19), on which the light sources (17, 18) and the light shading element (25) are arranged.

6. Illumination device (14) according to Claim 5, **characterized in that**
a height (32) of the light shading element (25) is at least 50% of a third distance measured from the printed circuit board (19) to the diffuser element (20).

7. Illumination device (14) according to any one of the preceding claims,
**characterized in that**
the light shading element (25) is formed to be opaque, in particular light reflective.

8. Illumination device (14) according to any one of the preceding claims,
**characterized in that**
the light shading element (25) is formed as part of a housing of the illumination device (14).

9. Illumination device (14) according to any one of the preceding claims,
**characterized in that**
the light shading element (25) is formed from plastic.

10. Motor vehicle (13) having an illumination device (14) according to any one of the preceding claims.

## Revendications

1. Dispositif d'éclairage (14) pour l'éclairage d'un habitacle (15) d'un véhicule automobile (13), comprenant une première et une deuxième zone partielle d'éclairage (28, 29) du dispositif d'éclairage (14) et comprenant au moins une première source de lumière (17) ayant un premier cône lumineux (26) et une deuxième source de lumière (18) ayant un deuxième cône lumineux (27), la première et la deuxième zone partielle d'éclairage (28, 29) étant réalisées sous la forme de zones directement adjacentes l'une de l'autre d'un élément de recouvrement (21) du dispositif d'éclairage (14), lesquelles peuvent être rétroéclairées par la première ou la deuxième source de lumière (17, 18), et les sources de lumière (17, 18) étant conçues pour être activées indépendamment l'une de l'autre et éclairer l'habitacle (15), la première source de lumière (17) présentant une première direction de rayonnement principal de lumière (22) et la deuxième source de lumière (18) une deuxième direction de rayonnement principal de lumière (23), et comprenant un élément diffuseur (20) positionné dans les trajets de rayon des sources de lumière (17, 18) et comprenant un élément de masquage de lumière (25) du dispositif d'éclairage (14), lequel est disposé au moins partiellement sur une ligne de liaison (24) entre la première source de lumière (17) et la deuxième source de lumière (18), de sorte qu'un contact visuel direct de la première source de lumière (17) à la deuxième source de lumière (18) soit interrompu, la ligne de liaison (24) se trouvant sensiblement à la hauteur de la première source de lumière (17) et de la deuxième source de lumière (18) et reliant les directions de rayonnement principal de lumière (22, 23),
**caractérisé en ce que** la première source de lumière (17) et la deuxième source de lumière (18) possèdent une pluralité de diodes électroluminescentes et **en ce que** l'élément de masquage de lumière (25), vu en direction de la ligne de liaison (24), est disposé plus près de la première source de lumière (17) que de la deuxième source de lumière (18), de sorte que lorsque la première source de lumière (17) est activée et que la deuxième source de lumière (18) est désactivée, seule la première zone partielle d'éclairage (28) peut être éclairée au moyen du premier cône lumineux (26) et lorsque la deuxième source de lumière (18) est activée, la deuxième zone partielle d'éclairage (29) et au moins partiellement la première zone partielle d'éclairage (28) peuvent être éclairées au moyen du deuxième cône lumineux (27).

2. Dispositif d'éclairage (14) selon la revendication 1, **caractérisé en ce qu'**une hauteur (32) de l'élément de masquage de lumière (25), mesurée perpendiculairement à la ligne de liaison (24), est inférieure à un premier écart (33) entre la première source de lumière (17) et l'élément diffuseur (20) et/ou à un deuxième écart (34) entre la deuxième source de lumière (18) et l'élément diffuseur (20).

3. Dispositif d'éclairage (14) selon la revendication 1 ou 2, **caractérisé en ce que** l'élément de masquage de lumière (25) est réalisé sous la forme d'une nervure en forme de plaque.

4. Dispositif d'éclairage (14) selon la revendication 1, **caractérisé en ce que** la première zone partielle d'éclairage (28) et la deuxième zone partielle d'éclairage (29) sont séparées par un élément diffuseur partiel (35) de l'élément diffuseur (20).

5. Dispositif d'éclairage (14) selon l'une des revendications précédentes, **caractérisé en ce que** le dispositif d'éclairage (14) comporte au moins un circuit imprimé (19) sur lequel sont disposés les sources de lumière (17, 18) et l'élément de masquage de lumière (25).

6. Dispositif d'éclairage (14) selon la revendication 5, **caractérisé en ce qu'**une hauteur (32) de l'élément de masquage de lumière (25) est égale à au moins 50 % d'un troisième écart, qui se mesure du circuit imprimé (19) à l'élément diffuseur (20).

7. Dispositif d'éclairage (14) selon l'une des revendications précédentes, **caractérisé en ce que** l'élément de masquage de lumière (25) est configuré opaque, notamment réfléchissant la lumière.

8. Dispositif d'éclairage (14) selon l'une des revendications précédentes, **caractérisé en ce que** l'élément de masquage de lumière (25) est réalisé sous la forme d'une partie d'un boîtier du dispositif d'éclairage (14).

9. Dispositif d'éclairage (14) selon l'une des revendications précédentes, **caractérisé en ce que** l'élément de masquage de lumière (25) est réalisé en matière plastique.

10. Véhicule automobile (13), équipé d'un dispositif d'éclairage (14) selon l'une des revendications précédentes.
